# EUROPÄISCHE PATENTANMELDUNG

(11) **EP 0 640 391 A2**
(43) Veröffentlichungstag der Anmeldung: **01.03.1995**
(21) Anmeldenummer: 94112111.3
(22) Anmeldetag: 03.08.1994
(51) Int. Cl.: B01J 37/00, B01J 23/00, B01D 53/72, B01D 53/70

(54) **Wabenförmiger keramischer Katalysator zur Oxidation von Kohlenwasserstoffen und halogenierten Kohlenwasserstoffen**

(30) Priorität: 11.08.1993 DE 4326938
(71) Anmelder: TRIDELTA GmbH, D-07621 Hermsdorf (DE)
(72) Erfinder: Winterstein, Georg, Dr., D-07639 Bad Klosterlausnitz (DE); Burckhardt, Wolfgang, Dr., D-07747 Jena (DE)

(57) **Zusammenfassung**

Durch die Erfindung soll eine Katalysator zur oxidativen Entgiftung auch von Spuren der oben genannten Stoffgruppe geschaffen werden, der die Nachteile bekannter Katalysatoren mit Metallen der Platingruppe hinsichtlich Preis, erforderlicher Regelungstechnik und Empfindlichkeit gegen abrasive Stäube nicht aufweist. Diese Aufgabe wird bei einem wabenförmigen keramischen Katalysator durch die Kombination folgender Merkmale gelöst:
- Trägerkomponente aus Schichtsilikaten,
- gleichmäßig zugemischte ternäre Oxide als katalytisch wirksame Komponente,
- spezifische Oberfläche > 50 m²/g
   und
- bimodale Porengrößenverteilung zwischen 5 ... 10 nm und 25 ... 200 nm.

## Beschreibung

Die Erfindung betrifft einen Katalysator der in im Titel genannten Art und dient zur oxidativen Entgiftung der Abgase von chemischen und Verbrennungsanlagen auch von geringen Anteilen oder Spuren der genannten Kohlenwasserstoffe.

Zur Entgiftung der Abgase von Verbrennungsmotoren aber auch anderer Verbrennungsabgase sind Oxidationskatalysatoren weit verbreitet, die auf einem keramischen Träger bzw. auf einem metallischen Träger mit keramischer Zwischenschicht als aktive Schicht Metalle der Platingruppe aufweisen (DE 31 08 922, DE 39 13 972). Diese Katalysatoren sind im sogenannten "Lambda-Fenster", d.h. bei stöchiometrischem Verbrennungsluftanteil oder höchstens 10 % Luftüberschuß nicht nur gegen Kohlenmonoxid und Stickoxide sondern auch gegen Kohlenwasserstoffe hoch wirksam (BOSCH, Kraftfahrtechnisches Taschenbuch, 20. Aufl., Düsseldorf 1987, S. 442). Nachteilig ist hierbei der hohe Preis der Edelmetalle der Platingruppe, die sich wegen der notwendigen dünnen Ausführung der Katalysatorschichten auch schwer recyceln lassen. Weiterhin ist eine peinlich genau einzuhaltende Verfahrenstechnik erforderlich, um eine geschlossene, gleichmäßige Zwischenschicht ("washcoat") aus gamma-Aluminiumoxid, in welche die Edelmetallpartikel eingelagert sind, in den engen Kanälen des meist wabenförmigen Katalysatorträgers aufzubringen. Im Anwendungsfall für Automobile ist zusätzlich noch ein Regelkreis mit sogenannter Lambdasonde für die volle Wirksamkeit erforderlich, was abgesehen vom Aufwand auch nicht nicht immer technisch realisierbar ist. Beim Einsatz in Verbrennungsanlagen muß überdies mit abrasiven Stauben gerechnet werden, welche die aktive Schicht zunehmend "abschleifen" und somit die Wirksamkeit des Katalysators stetig vermindern.

Es sind auch Schichtkatalysatoren ohne Edelmetalle, beispielsweise mit Mischoxiden der seltenen Erden,
bekanntgeworden (US 4.820.678). Sie haben die gleichen Nachteile, wie die zuvor geschilderten Ausführungen, wenn man davon absieht, daß die Schichten unter dem Preisaspekt dicker ausgeführt und dadurch der Wirkungsverlust durch Abrasion hinausgezögert werden könnte.

Schließlich sind auch Katalysatoren aus hochporöser Keramik mit gleichmäßig zugemischter aktiver Katalysatormasse (EP 0 205 813) oder ganz daraus bestehend (EP 0 327 814) bekannt. Die aktiv katalytischen Bestandteile (im ersten Fall Zeolithe, im zweiten Titanoxidmassen) vermeiden zwar auch die Verwendung von Platinmetallen, sind aber nur gegen Stickoxide wirksam.

Bei solchen durchgängig in ihrem ganzen Volumen wirksamen Katalysatoren hat sich ebenso wie bei den zuvor behandelten Schichtausführungen die Wabenform allgemein durchgesetzt und bewährt.

Der Erfindung liegt daher die Aufgabe zugrunde, einen hochwirksamen wabenförmigen Katalysator zur Oxidation von Kohlenwasserstoffen einschließlich der besonders umweltschädlichen halogenierten Kohlenwasserstoffe zu schaffen, der die Nachteile des Standes der Technik nicht aufweist.

Diese Aufgabe wird durch die im Patentanspruch definierte Erfindung gelöst.

Der erfindungsgemäße Wabenkörper erhält seine mechanische Festigkeit und läßt sich nach bekannten keramischen Formgebungsverfahren herstellen infolge der Verwendung von Schichtsilikaten (Phyllosilikate) mit pseudohexagonalen oder hexagonalen Schichtstrukturen, wie solche aus der:
a) Pyrophyllit-Talk-Gruppe
b) Glimmer-Gruppe einschließlich Hydroglimmer
c) Montmorillonit-Saponit-Gruppe
d) Sudovit-Chlorit-gruppe
e) Kaolinit-Antigorit-Gruppe
f) Halloyisit-Reihe
g) Pyrosmalit-Reihe
h) Polygorskit-Gruppe
i) Reylit-Gruppe.

Als katalytisch wirksame Komponente werden ternäre Oxide aus folgenden Gruppen zugesetzt:
Spinelle der allgemeinen Zusammensetzung:

A'₁₋ₓA''ₓB'_{2-y}B''_{y}O₄

mit:
A': Cu, Co, Ni
A'': Ag, Zn, Cd
B': Mn, Al
B'': Cr, V, Mo, W
Perowskite der allgemeinen Zusammensetzung:

A'₁₋ₓA''ₓB'_{1-y}B''_{y}O₄

mit:
A': La, Pr, Nd
A'': K, Ag, Cu, Ba, Sr, Ca, Mg, Th
B': Mn, Co, Fe, Ni
B'': Cu, Cr, V, Mo, W, Zr
54 bis 87 Masse% der Trägerkomponente aus Schichtsilikaten und 13 bis 46 Masse% katalytisch wirksamer Komponente werden unter Zusatz organischer Formgebungshilfstoffe (deren Masseanteil von einigen Prozent bezogen auf die Gesamtheit der anorganischen Stoffe ist dem Fachmann geläufig und ist hier nicht berücksichtigt) homogenisiert und durch Strangpressen zu einer Vollkatalysator-Wabe geformt.

Durch eine gezielte Wärmebehandlung werden die erfindungsgemäße spezifische Oberfläche und Porenverteilung eingestellt.

Die Erfindung wird nachstehend an Ausführungsbeispielen näher erläutert. Die beigefügten, weitgehend für sich selbst sprechenden Zeichnungen stellen dar:

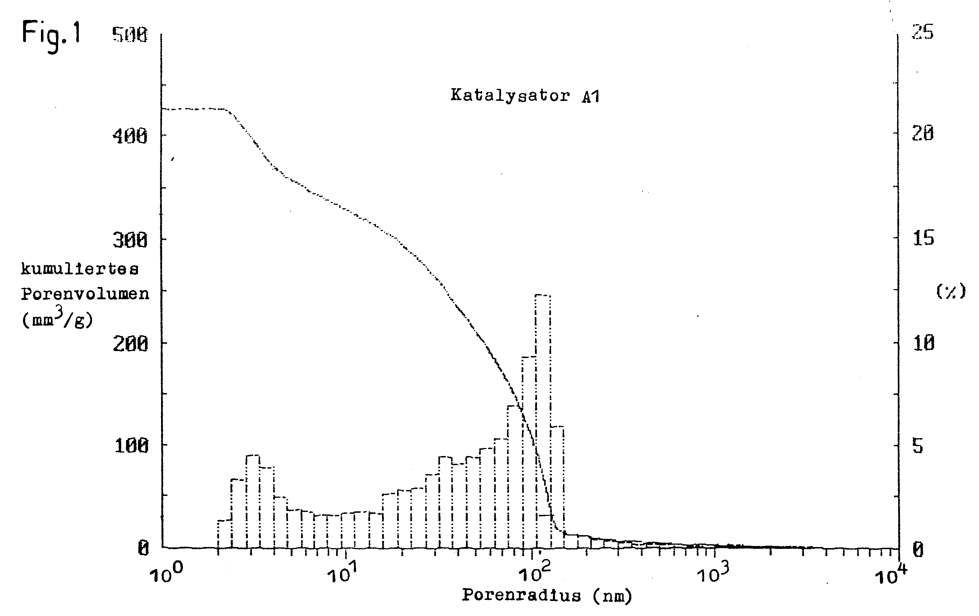

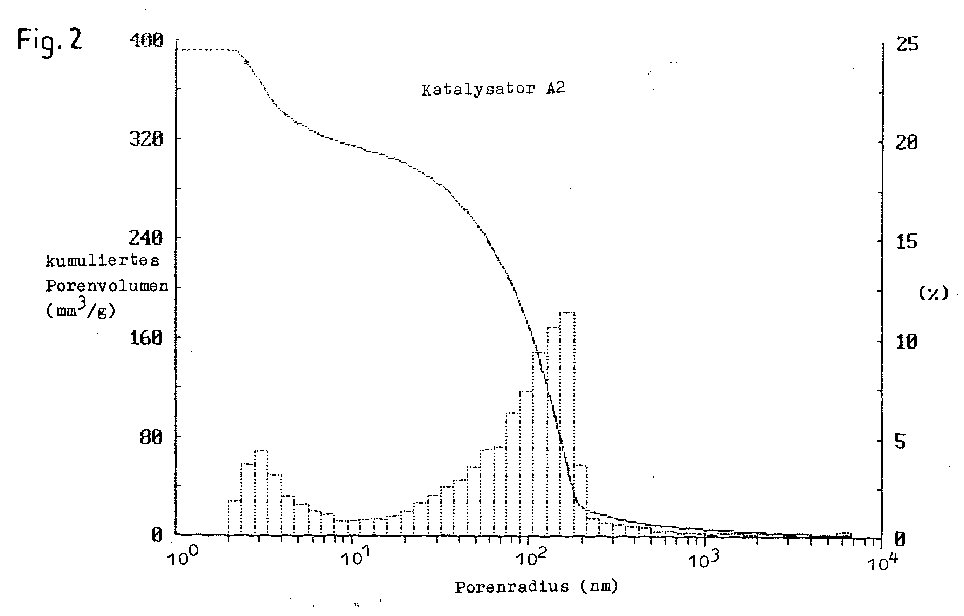

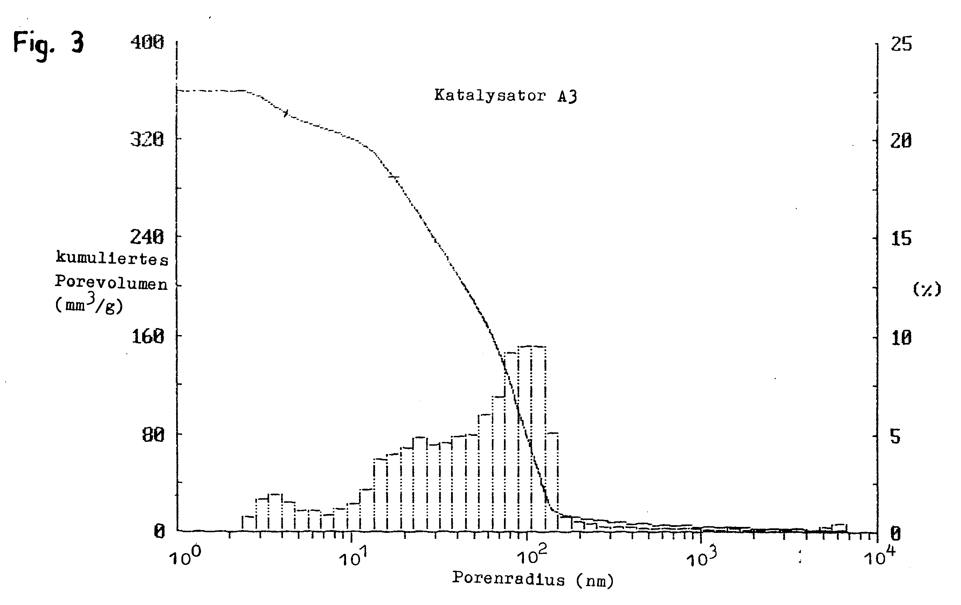

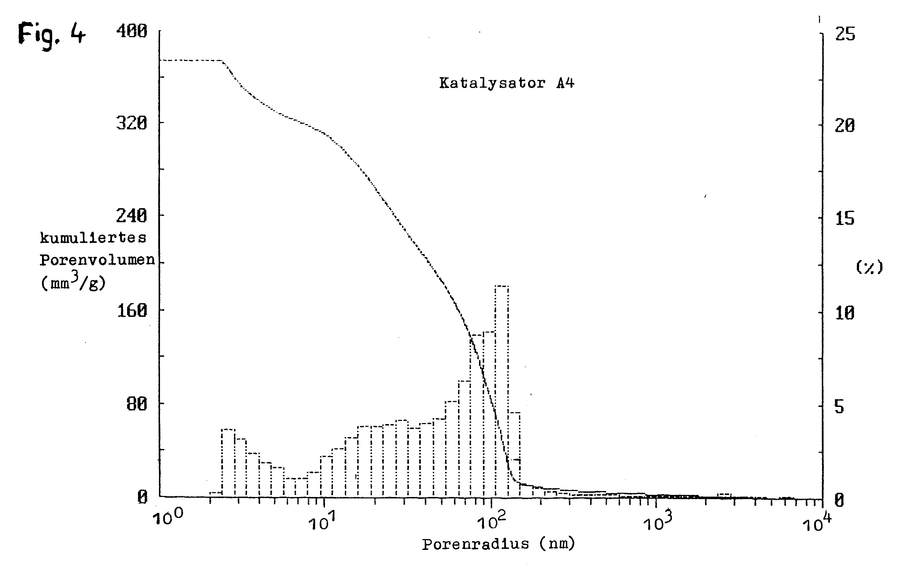

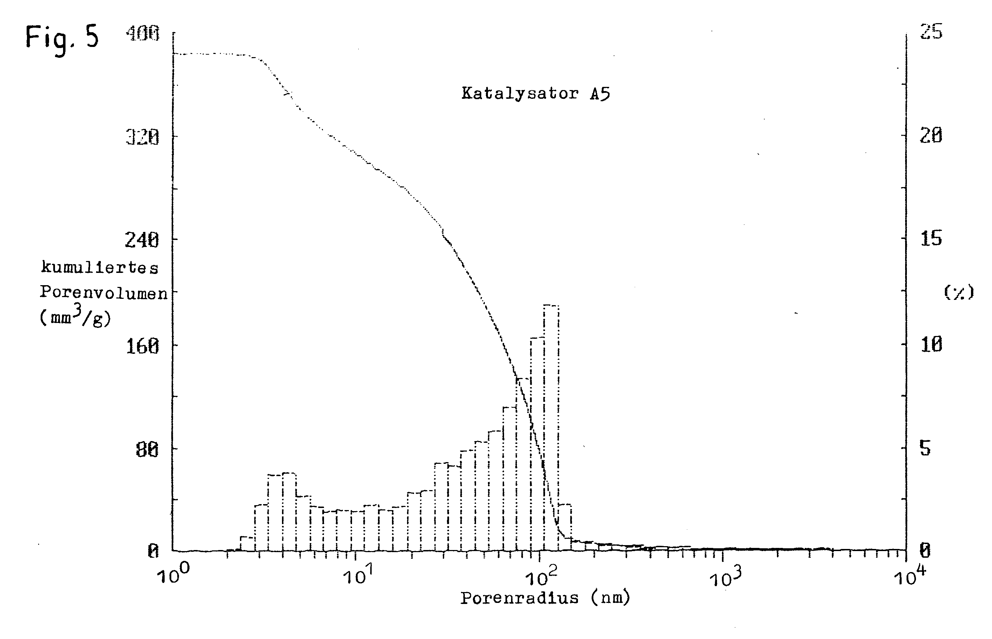

- Fig. 1 bis 5:: Die Charakterisierung der bimodalen Porenstruktur der erfindungsgemäßen Katalysatoren A1 bis A5 durch Volumenanteil und kumuliertes Porenvolumen als Funktion des Porenradius.
- Fig. 6 bis 10:: Die Wirksamkeit der erfindungsgemäßen Katalysatoren A1 bis A5 beim Umsatz der angegebenen Konzentrationen verschiedener schädlicher Kohlenwasserstoffe bzw. chlorierter Kohlenwasserstoffe ausgedrückt durch den prozentualen Umsatzgrad als Funktion der Katalysatortemperatur.

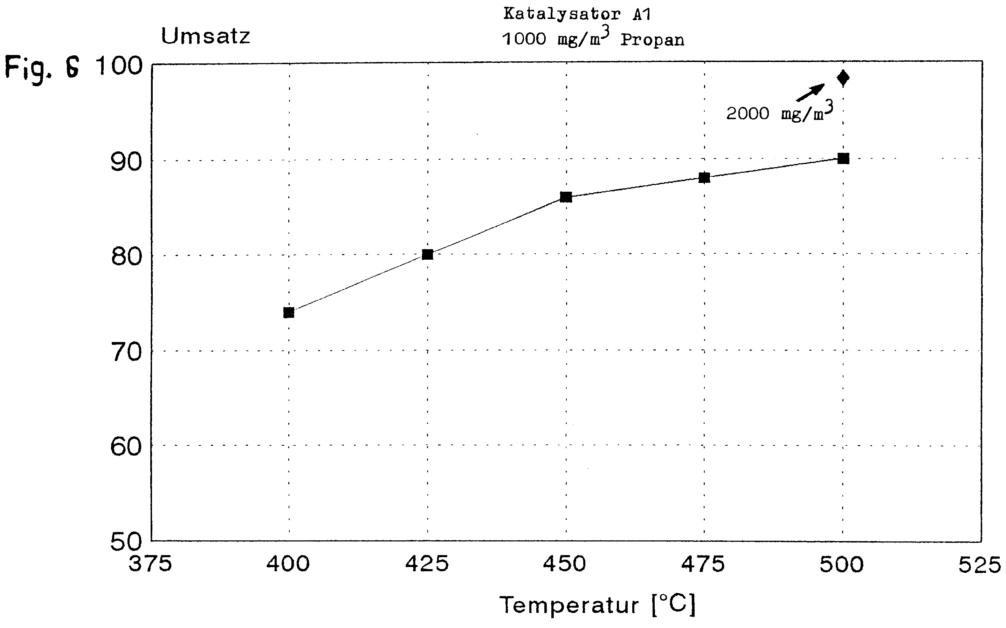

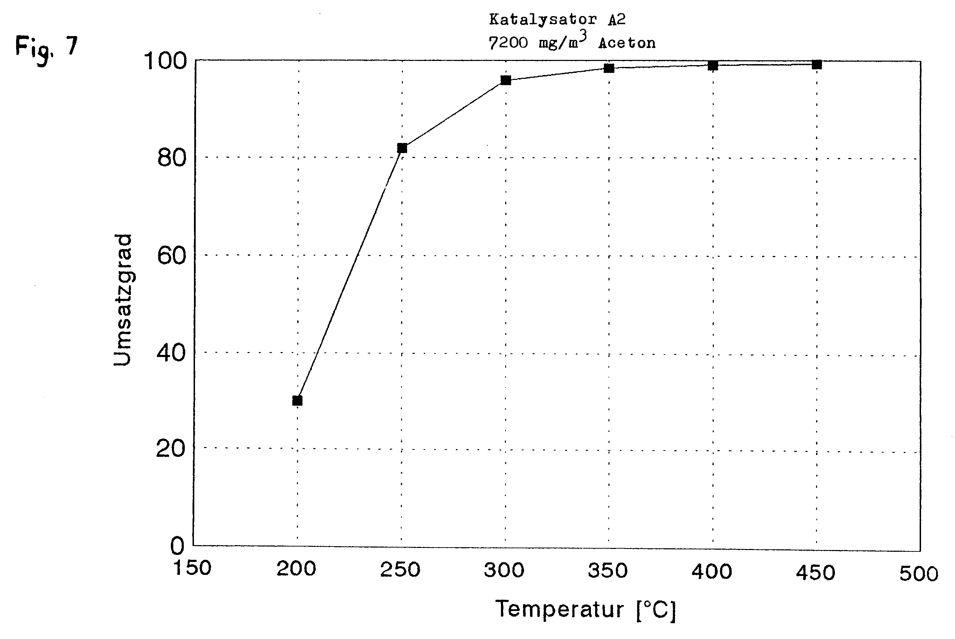

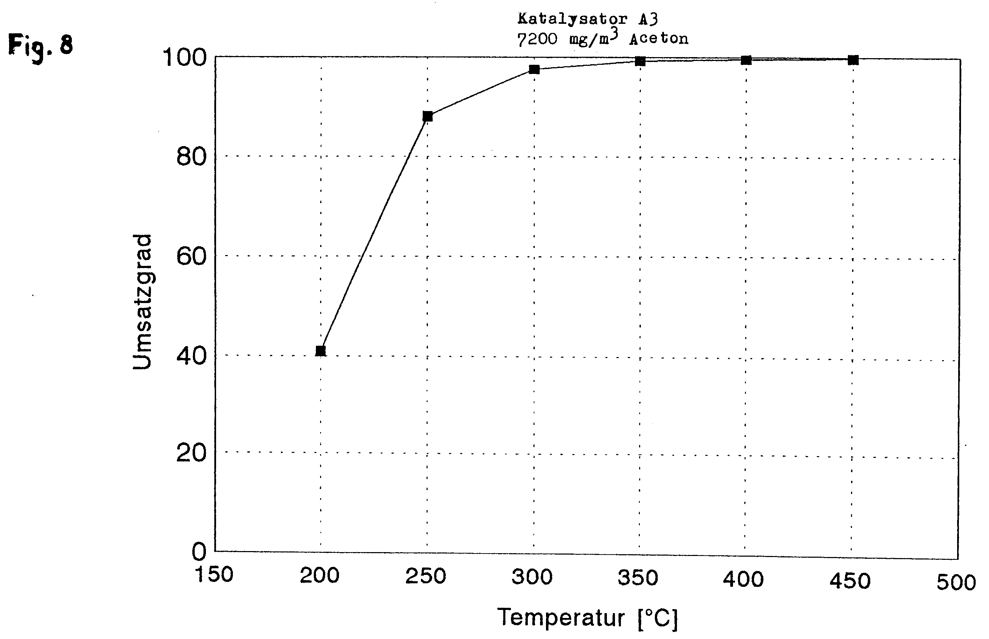

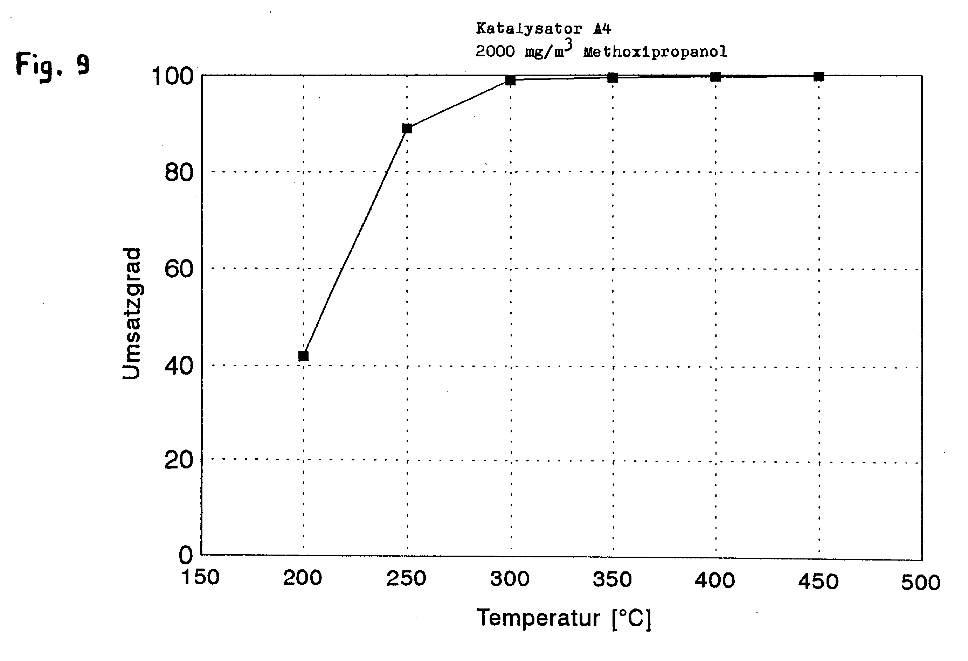

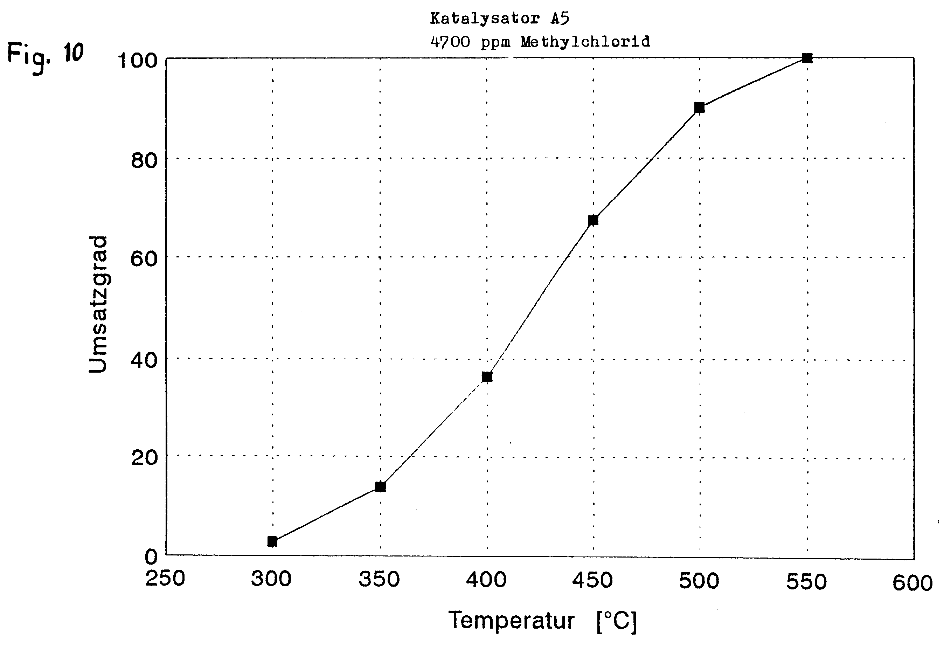

Die katalytisch wirksame Komponente der solcherart charakterisierten Katalysatoren besteht aus den der Trägerkomponente gleichmäßig zugemischten, nachstehend aufgeführten ternären Oxiden in den angegebenen Masse-Anteilen. Die anteiligen Umsätze der Figuren 6 bis 10 wurden mit den einzelnen Katalysatoren bei den jeweils angegebenen Raumgeschwindigkeiten (Durchsatz an katalytisch oxidiertem Gasvolumen als Vielfaches des Katalysatorvolumens pro Zeiteinheit ausgedrückt) erreicht:
A1 : 15 Masse% Perowskit mit
A' = La
A'' = Ba
B' = Co
B'' = Fe
Raumgeschwindigkeit: 17300 h⁻¹
A2 : 35 Masse% Spinell mit
A' = Cu
A'' = Co
B' = Mn
B'' = Fe
Raumgeschwindigkeit: 22000 h⁻¹
A3 : 25 Masse% Perowskit mit
A' = Nd, Pr
A'' = Sr
B' = Mn
B'' = Co
Raumgeschwindigkeit: 22000 h⁻¹
A4 : 25 Masse% Perowskit mit
A' = La
A'' = Th
B' = Mn
B'' = Fe
Raumgeschwindigkeit: 22000 h⁻¹
A5 : 10 Masse% Perowskit mit
A' = La
A'' = K
B' = Mn
B'' = Cu
Raumgeschwindigkeit: 7800 h⁻¹.

## Patentansprüche

1. Wabenförmiger keramischer Katalysator zur Oxidation von Kohlenwasserstoffen und halogenierten Kohlenwasserstoffen, gekennzeichnet durch die Kombination folgender Merkmale:
- Trägerkomponente aus Schichtsilikaten, die mit organischen Zusätzen geformt wurden,
- gleichmäßig zugemischte ternäre Oxide als katalytisch wirksame Komponente,
- eine spezifische Oberfläche über 50 m²/g
und
- eine bimodale Porenstruktur mit den Porenradienbereichen 5 ... 10 nm und 25 ... 200 nm.

2. Katalysator nach Anspruch 1, dadurch gekennzeichnet, daß die ternären Oxide Spinellstruktur haben.

3. Katalysator nach Anspruch 1, dadurch gekennzeichnet, daß die ternären Oxide Perowskitstruktur haben.
